# EUROPÄISCHE PATENTSCHRIFT

(11) **EP 3 486 544 B1**
(45) Veröffentlichungstag und Bekanntmachung des Hinweises auf die Patenterteilung: **17.07.2024**
(21) Anmeldenummer: 18207495.5
(22) Anmeldetag: 21.11.2018
(51) Int. Cl.: F16L 55/134, F16L 55/44

(54) **SANIERUNGSPACKER MIT HOHLRAUM**
RENOVATION PACKER HAVING A CAVITY
COMPACTEUR D'ASSAINISSEMENT À CAVITÉ

(30) Priorität: 21.11.2017 DE 102017127458
(43) Veröffentlichungstag der Anmeldung: 22.05.2019
(73) Patentinhaber: Krausser, Antje, 49777 Klein Berssen (DE)
(72) Erfinder: Krausser, Antje, 49777 Klein Berssen (DE)
(74) Vertreter: Hannke Bittner & Partner mbB Regensburg

(56) Entgegenhaltungen:
- EP-A1- 0 256 949
- EP-A1- 1 632 706
- WO-A1-2016/145095
- FR-A1- 2 736 989
- US-A1- 2005 284 504

## Beschreibung

Die vorliegende Erfindung bezieht sich auf einen Sanierungspacker. Derartige Sanierungspacker werden im Stand der Technik eingesetzt, um insbesondere Rohre oder andere hohle Elemente zu Sanieren. Zu diesem Zweck ist es bekannt, dass ein expandierbarer Körper in das zu reparierende Rohr eingeführt wird. An diesem expandierbaren Körper ist an der Au-ßenoberfläche eine Substanz wie etwa ein Harz angeordnet. Sobald sich der expandierbare Körper an einer Schadstelle oder Bruchstelle des Rohres befindet, wird er expandiert und die Substanz wird an der geborstenen Stelle angelegt. Auf diese Weise kann ein Rohrbruch behoben bzw. saniert werden. Dabei ist es erforderlich, dass dieser expandierbare Körper ein hohes Maß an Flexibilität aufweist, da er teilweise durch gekrümmte und sogar stark gekrümmte Rohre geschoben werden muss. Andererseits tritt im Stand der Technik des Öfteren das Problem auf, dass sich in dem besagten Rohr noch Flüssigkeiten oder andere Substanzen befinden. Diese können insbesondere auch den Sanierungsprozess behindern.

Aus EP 0 256 949 A1 ist eine expandierbare Vorrichtung zum Abdichten eines Fluidtransportrohres mit einem aufblasbaren zylindrischen Gehäuse und einem innerhalb dieses Gehäuses liegenden Rohr bekannt. Durch dieses Rohr soll ein kontrollierter Durchgang eines Fluids ermöglicht werden. Das Rohr kann jedoch aus funktionalen Gründen nicht flexibel sein, so dass diese Vorrichtung nicht als Sanierungspacker in sich entlang der Längsrichtung gekrümmten Rohren verwendbar ist.

Analog gilt dies auch für den aus WO 2016/145095 A1 bekannten Verschlusselement. Ein bei dieser Vorrichtung vorgesehenes zentrales Rohr muss steif ausgebildet sein, um auch im Zustand des expandierten Ballons zwei Endbereiche des Verschlussstücks voneinander beabstandet zu halten. Auch diese Vorrichtung kann daher die Anforderungen eines in einem gekrümmten Rohr einsetzbaren Sanierungspackers nicht erfüllen.

Der aus FR 2 736 989 A1 bekannte Gegenstand besitzt keine Durchgangsöffnung, die sich von einer Stirnseite des Grundkörpers zu der zweiten Stirnseite erstreckt. Dementsprechend ist ein Durchfluss eines Fluids während der Sanierung höchstens eingeschränkt möglich. Zur Sanierung eines defekten Rohrbereichs sind seitliche Auslassöffnungen vorgesehen, um einen defekten Rohrbereich mit einem aushärtbaren Fluid zu beaufschlagen.

Aus EP 1 632 706 A1 ist ein flexibles Werkzeug zur Inspektion von Rohren bekannt. Um die Flexibilität zu gewährleisten, sind Manschetten vorgesehen, die gegenüber einander beweglich sind. Diese sind hohl, um eine Kette aufnehmen zu können, über welche die beiden Werkzeugenden miteinander verbunden sind. Dieses Werkzeug kann nicht zur Sanierung von Rohrleitungen verwendet werden.

Der vorliegenden Erfindung liegt daher die Aufgabe zugrunde, einen Sanierungspacker zur Verfügung zu stellen, der auch durch gekrümmte Rohre führbar ist, der jedoch andererseits auch die Behandlung oder Sanierung von Elementen ermöglicht, in welchen sich Substanzen und beispielsweise Flüssigkeiten befinden. Im Folgenden wird hinsichtlich der zu sanierenden Objekten von Rohren gesprochen, es ist jedoch darauf hinzuweisen, dass auch andere Elemente saniert werden können, wie beispielsweise Schächte, Kanäle und dergleichen.

Ein erfindungsgemäßer Sanierungspacker zum wenigstens teilweisen Sanieren von Elementen und insbesondere von Rohren weist einen elastischen Grundkörper auf, der wenigstens abschnittsweise durch die Beaufschlagung mit einem fließfähigen Medium expandierbar ist, wobei sich der elastische Grundkörper in einer vorgegebenen Längsrichtung erstreckt und wobei der Grundkörper eine Außenoberfläche aufweist, welche sich ebenfalls in dieser Längsrichtung erstreckt und welche vorzugsweise und zumindest mittelbar wenigstens in einem in dieser Längsrichtung angeordneten zentralen Bereich mit dem zu sanierenden Element in Kontakt bringbar ist.

Erfindungsgemäß weist der Sanierungspacker eine Öffnung auf, welche sich wenigstens abschnittsweise innerhalb des elastischen Grundkörpers in der Längsrichtung erstreckt.

Bei dem zentralen Bereich des Sanierungspackers handelt es sich insbesondere um einen mittleren bzw. zentralen Bereich bezogen auf die Gesamtlänge des Sanierungspackers. So könnte es sich bei diesem zentralen Bereich etwa um zwei mittlere Viertel des Sanierungspackers, bevorzugt ein mittleres Drittel des Sanierungspackers, bevorzugt um zwei mittlere Achtel des Sanierungspackers und besonders bevorzugt um ein mittleres Fünftel handeln. Unter einem zumindest mittelbaren in Kontakt bringen wird verstanden, dass auf der Oberfläche des Grundkörpers ein Sanierungsmaterial wie etwa ein Harz oder Saniermatten abgelegt sein können, welche dann bei einer Expansion des Sanierungspackers an die zu sanierenden Bereiche angelegt werden.

Es wird daher vorgeschlagen, dass der Sanierungspacker eine Öffnung und insbesondere eine zylinderförmige Öffnung insbesondere in dem Inneren des Grundkörpers aufweist. Über diese Öffnung können Substanzen wie beispielsweise Flüssigkeit aus dem zu sanierenden Element abgesogen bzw. abgenommen werden. Bevorzugt ist daher diese Öffnung als Kanal und insbesondere als umfänglich geschlossener Kanal ausgebildet.

Bevorzugt ist der elastische Grundkörper schlauchartig ausgebildet. Dabei weist besonders bevorzugt der elastische Grundkörper Stirnflächen auf, welche diesen im Wesentlichen nach beiden Richtungen hin abschließen. Bevorzugt ist der elastische Grundkörper im Wesentlichen abgeschlossen und/oder umgibt einen im Wesentlichen abgeschlossenen Raum , wobei im Wesentlichen bedeutet, dass der Grundkörper eine Öffnung aufweisen kann, über welche ihm ein fließfähiges Medium und beispielsweise Druckluft zuführbar sein kann. Durch das Zuführen dieser Druckluft ist dieser Grundkörper expandierbar und kann so an die zu sanierende Stelle des zu sanierenden Rohres angelegt werden. Der abgeschlossene Raum kann dabei beispielsweise durch eine Wandung des Grundkörpers und durch eine Wandung eines innerhalb dieses Grundkörpers verlaufenden Schlauches gebildet sein. An den Stirnflächen kann der Grundkörper jeweils durch ein unten genauer beschriebenes Abschlusselement verschlossen sein.

Bei einer bevorzugten Ausführungsform ist damit insbesondere die Außenoberfläche des Grundkörpers gegen das zu sanierende Element pressbar.

Bevorzugt ist dabei die Außenoberfläche mit einem Saniermaterial wie beispielsweise einem Harz oder auch einer Schicht beaufschlagt, welche durch das Expandieren des Grundkörpers an die zu sanierende Stelle angelegt und/oder angedrückt werden kann.

Die besagte Öffnung dient bevorzugt zum Abführen eines Mediums. Bei einer bevorzugten Ausführungsform handelt es sich bei dem Grundkörper um einen schlauchförmigen Körper und insbesondere einen Schlauch, der, wie unten erwähnt, an ein weiteres Element anvulkanisiert sein kann.

Bei einer bevorzugten Ausführungsform weist der Sanierungspacker wenigstens eine Ventileinrichtung auf. Diese Ventileinrichtung kann dabei in dem Bereich vorgesehen sein, in dem der Sanierungspacker mit einem fließfähigen Medium beaufschlagt wird. Beispielsweise kann es sich bei der Ventileinrichtung um ein Rückschlagventil handeln, welches eine Zufuhr von Druckluft in den Grundkörper zu dessen Expansion ermöglicht, aber ein Rückfließen dieser Druckluft verhindert.

Vorteilhaft ist an der Außenoberfläche des Sanierungspackers ein Material anordenbar, welches auf der Innenoberfläche des zu sanierenden Rohres aufgetragen wird. Dieses Material ist bevorzugt aus einer Gruppe von Materialien ausgewählt, welche GFK - Gewebe, Nadelfilz, Aramid, Kevlar, Karbon, gestrickte Gewebe, gestricktes Polyamid, gestrickte Textilien oder Kombinationen aus diesen Materialien enthält. Diese Materialien werden auf der Schadstelle verpresst und auf diese Weise wird deren Funktionstüchtigkeit (bzw. diejenige des Rohres) wieder hergestellt. Bevorzugt wird dabei die Oberfläche des Grundkörpers bzw. des Sanierungspackers auch mit einem Härtungsmaterial, insbesondere einem Harzgemisch, bestückt und dieses dann ebenfalls an die entsprechende Schadstelle innerhalb des Rohres verbracht, und an diese Innenwandung angepresst.

Bei einer bevorzugten Ausführungsform ist das Material des Grundkörpers aus einer Gruppe von Materialien ausgewählt, welche Kautschukarten, Silikone, Silikongemische, sowie Plastikmaterialien enthält. So kann der Grundkörper auch als Plastikschlauch ausgebildet sein, der genäht, geschweißt, verklebt oder gegossen ist. Auch können Kombinationen aus diesen Verbindungsarten verwendet sein.

Bei einer weiteren vorteilhaften Ausführungsform ist der Grundkörper zwischen seinen Stirnflächen unterbrechungsfrei ausgebildet und weist insbesondere in seiner Umfangswandung keinerlei Öffnungen auf.

Erfindungsgemäß handelt es sich bei der besagten Öffnung im Inneren des Grundkörpers um eine Durchgangsöffnung, welche sich von einer ersten Stirnseite des Grundkörpers hin zu einer zweiten Stirnseite des Grundkörpers erstreckt. Über diese Durchgangsöffnung bzw. durchgehende Öffnung kann eine Flüssigkeit aus dem zu sanierenden Rohr aus- bzw. abgeführt werden.

Bei einer bevorzugten Ausführungsform ist die Öffnung rohrförmig ausgeführt und weist besonders bevorzugt ein kreisförmiges Profil auf. Besonders bevorzugt weist die Öffnung einen gleichbleibenden Querschnitt auf. Bevorzugt ist die Öffnung wenigstens abschnittsweise durch einen Schlauch ausgebildet. Bei einer weiteren bevorzugten Ausführungsform ist diese Öffnung wenigstens teilweise durch einen Stutzen ausgebildet, der an einem Abschlusselement ausgebildet ist. Dabei handelt es sich bevorzugt bei diesem Schlauch um einen Schlauch, der flexibel ist, bevorzugt aber nicht oder nur geringfügig komprimierbar.

Besonders bevorzugt weist ein innerer Schlauch, der die Öffnung ausbildet, eine Federungseinrichtung und insbesondere eine Spiralfeder auf. Diese Spiralfeder ist besonders bevorzugt um diesen schlauchförmigen inneren Körper gelegt. Diese Spiralfeder sorgt einerseits für eine hohe Stabilität, sobald der Grundkörper mit Druckluft beaufschlagt wird, andererseits erlaubt diese Spiralfeder eine hohe Flexibilität des inneren Schlauches. Bei einer besonders bevorzugten Ausführungsform ist der innere schlauchförmige Körper aus einem Kautschuk und insbesondere einem Naturkautschuk hergestellt. Es wäre jedoch auch denkbar, dass diese Spiralfeder in ein Material des schlauchförmigen Körpers eingearbeitet ist. Auch könnte die Federungseinrichtung bzw. Spiralfeder innerhalb des schlauchförmigen Körpers angeordnet sein und diesen so von innen her abstützen.

Besonders bevorzugt ist ein Verhältnis zwischen dem Innendurchmesser des Grundkörpers und dem Innendurchmesser des inneren Schlauches zwischen 2:1 und 6:1, bevorzugt zwischen 3:1 und 5:1. So kann beispielsweise der äußere Schlauch einen Innendurchmesser von 150 mm aufweisen und der innere Schlauch beispielsweise einen Durchmesser zwischen 30 und 50 mm.

Besonders bevorzugt weist der innere Schlauch, der die Öffnung ausbildet, einen Durchmesser auf, der größer ist als 10 mm, bevorzugt größer als 20 mm, bevorzugt größer als 25 mm. Besonders bevorzugt weist der innere Schlauch einen Durchmesser auf, der geringer ist als 90 mm, bevorzugt geringer als 80 mm, bevorzugt geringer als 70 mm, bevorzugt geringer als 60 mm und besonders bevorzugt geringer als 55 mm.

Bei einer weiteren vorteilhaften Ausführungsform ist der expandierbare Grundkörper beheizbar. Dies kann beispielsweise dadurch erfolgen, dass dem Grundkörper ein weiteres Medium wie insbesondere eine erwärmte Flüssigkeit zugeführt wird. Auch wäre es möglich, dass dem Grundkörper ein erwärmtes Gas zugeführt wird.

Bei einer weiteren vorteilhaften Ausführungsform umgibt der Grundkörper die besagte Öffnung vollumfänglich. Damit ist besonders bevorzugt diese Öffnung im Wesentlichen rohr- bzw. zylinderförmig ausgebildet und erstreckt sich besonders bevorzugt in der gleichen Richtung wie der Grundkörper selbst.

Bei einer weiteren vorteilhaften Ausführungsform weist der Sanierungspacker einen Zuführanschluss zum Zuführen eines fließfähigen und insbesondere gasförmigen Mediums an den Grundkörper auf. Auf diese Weise kann der Grundkörper aufgeblasen werden.

Besonders bevorzugt ist der zu expandierende Hohlraum derart ausgebildet, dass eine diesen nach innen hin begrenzende Wandung, das heißt eine in Richtung der Öffnung weisende Wandung, starr ist bzw. im Wesentlichen sich nicht oder wenig verformt und eine Außenwandung sich hingegen stark verformt. Auf diese Weise kann eine besonders effiziente Expansion des Grundkörpers bei Beaufschlagung mit Druckluft erreicht werden. Diese Innenwandung ist bevorzugt durch den inneren Schlauch gebildet, der die Öffnung umgibt. Diese Öffnung ist wie oben erwähnt, kanalartig ausgebildet. Bevorzugt ist eine den Hohlraum umgebende Außenwandung durch den Grundkörper ausgebildet und eine den Hohlraum nach innen hin begrenzende Wandung wenigstens teilweise als Schlauchelement.

Erfindungsgemäß ist innerhalb des Grundkörpers ein weiterer schlauchförmiger Körper ausgebildet, der die besagte Öffnung ausbildet. Auf diese Weise weist daher der Sanierungspacker zwei ineinander verlaufende Schläuche auf. Der zu expandierende Hohlraum verläuft bevorzugt wenigstens abschnittsweise zwischen diesen beiden Schläuchen.

Bei einer bevorzugten Ausführungsform ist dieser innere schlauchförmige Körper an dem äußeren schlauchförmigen Körper, der den Grundkörper bildet, über die Stirnflächen gehalten. Dabei ist es möglich, dass die Stirnflächen eine mechanische Verbindung zwischen dem inneren schlauchförmigen Körper und dem Grundkörper herstellen.

Besonders bevorzugt ist dieser innere schlauchförmige Körper abgesehen von seinen stirnseitigen Öffnungen dicht ausgebildet. Über diesen schlauchförmigen Körper können, wie oben erwähnt, Flüssigkeiten aus dem zu sanierenden Rohr abgezogen werden.

Bei einer bevorzugten Ausführungsform wäre es möglich, dass der schlauchartige Körper in den Grundkörper eingepresst ist. Bevorzugt wird jedoch der schlauchförmige Körper an dem Grundkörper mechanisch und insbesondere über stirnseitige Wandungen und insbesondere über Abschlusselemente gehalten.

Bei einer weiteren vorteilhaften Ausführungsform ist der schlauchförmige Körper ein flexibler Körper. Auf diese Weise kann der gesamte Sanierungspacker, das heißt der Sanierungspacker, der sich sowohl aus dem Grundkörper als auch dem schlauchförmigen Körper zusammensetzt, auch durch gekrümmte Rohre und insbesondere auch durch stark gekrümmte Rohre geführt werden.

Besonders bevorzugt ist der schlauchförmige Körper ein an ein Abschlusselement anvulkanisierter Schlauch. Besonders bevorzugt ist der Grundkörper an den inneren schlauchförmigen Körper und/oder (bevorzugt) an das Abschlusselement anvulkanisiert.

Bei einer weiteren vorteilhaften Ausführungsform weist der Grundkörper wenigstens eine stirnseitige Wandung und/oder ein Abschlusselement auf, wobei in dieser Wandung wenigstens eine Öffnung angeordnet ist. Bevorzugt weist der schlauchförmige Grundkörper auch eine zweite Wandung und/oder ein Abschlusselement auf, wobei besonders bevorzugt auch an dieser zweiten Wandung bzw. in dieser zweiten Wandung wenigstens eine Öffnung angeordnet ist. Besonders bevorzugt sind in den besagten Wandungen bzw. Abschlusselementen mehrere Öffnungen ausgebildet. Bevorzugt können in diesen Öffnungen Haltemittel bzw. Werkzeugelemente angeordnet sein. So können beispielsweise in diesen Öffnungen Haken eingeschraubt werden bzw. Ösen, mittels denen der Sanierungspacker wieder aus einem zu sanierenden Rohr herausgezogen werden kann. Auch können in diesen Öffnungen Traggestelle etwa für Räder oder dergleichen angeordnet werden, um den Sanierungspacker rollend durch Rohre zu fördern. Besonders bevorzugt sind auch in der zweiten stirnseitigen Wandung entsprechende Öffnungen für solche Elemente angeordnet. Bevorzugt sind dabei in diesen Öffnungen Gewinde und insbesondere Innengewinde vorgesehen, um andere Werkzeuge, wie beispielsweise die erwähnten Haken oder dergleichen in diese Öffnungen einschrauben zu können.

Zwischen diesen beiden Wandungen wird besonders bevorzugt ein Hohlraum ausgebildet, der durch das fließfähige Medium expandierbar ist. Damit wird bevorzugt dieser Hohlraum durch eine Wandung des Grundkörpers, eine Wandung des inneren Schlauches sowie die beiden Abschlusselemente begrenzt

Dieses besagte Abschlusselement, welches beispielsweise als Stopfen ausgebildet sein kann, kann dabei dazu dienen, um eine mechanische Verbindung zwischen dem Grundkörper und dem inneren Schlauch, welcher die Öffnung ausbildet, herzustellen.

Im Rahmen der Herstellung kann dabei zunächst der innere Schlauch an der besagten Wandung bzw. dem Abschlusselement befestigt werden. Dabei kann bevorzugt der innere Schlauch auf einen Stutzen, der einen Bestandteil dieses Abschlusselements bildet, aufgeschoben und ggfs. auch anvulkanisiert werden. Anschließend kann der als äußerer Schlauch ausgebildete Grundkörper ebenfalls auf einen weiteren Stutzen, der an dem Abschlusselement angeordnet ist und der den oben genannten Stutzen umgibt, aufgeschoben und ggfs. ebenfalls anvulkanisiert werden, um so den Sanierungspacker in seiner Gesamtheit herzustellen.

Die vorliegende Erfindung ist weiterhin auf eine Sanierungspackeranordnung gerichtet, welche einen Sanierungspacker der oben beschriebenen Art aufweist sowie eine Kompressionseinrichtung, welche ein unter Druck stehendes und dem Sanierungspacker zuzuführendes gasförmiges Medium erzeugt. Dieses gasförmige Medium dient dabei insbesondere zur Expansion des Grundkörpers. Bei diesem gasförmigen Medium handelt es sich insbesondere aber nicht ausschließlich um Druckluft.

Die vorliegende Erfindung ist weiterhin auf ein Abschlusselement, für einen Sanierungspacker der oben beschriebenen Art gerichtet. Dieses Abschlusselement weist eine Seitenwandung und einen an dem dieser Seitenwandung angeordneten ersten Stutzen der sich in einer vorgegebenen Richtung erstreckt und auf den ein schlauchförmiger Körper aufschiebbar ist, auf und mit einen an dieser Seitenwandung angeordneten zweiten Stutzen, der sich ebenfalls in der vorgegebenen Richtung erstreckt und der um den ersten Stutzen herum angeordnet ist und an dem ein weiterer schlauchförmiger Körper aufschiebbar ist, wobei die Seitenwandung weiterhin eine Öffnung aufweist, welche in den ersten Stutzen mündet.

In einer bevorzugten Ausführungsform ist das Abschlusselement einteilig ausgebildet. Bevorzugt ist das Abschlusselement wenigstens teilweise aus einem Gummi und insbesondere einem Hartgummi hergestellt. Bei einer weiteren vorteilhaften Ausführungsform ist der zweite (äußere) Stutzen in seiner Erstreckungsrichtung länger als der erste Stutzen. Bevorzugt ist der zweite Stutzen um wenigstens 10% länger als der erste Stutzen, bevorzugt um wenigstens 20%, bevorzugt um wenigstens 30%, bevorzugt um wenigstens 40%, besonders bevorzugt um wenigstens 50% und besonders bevorzugt um wenigstens 60%.

Bei einer weiteren bevorzugten Ausführungsform ist in die Seitenwandung wenigstens eine Öffnung eingearbeitet, bevorzugt mehrere Öffnungen. Bei einer weiteren bevorzugten Ausführungsform weisen diese Öffnungen, die in der Stirnwandung angeordnet sind, eine Tiefe auf, die größer ist als 5 mm, bevorzugt größer als 10 mm, bevorzugt größer als 2 cm, bevorzugt größer als 5 cm, bevorzugt größer als 7 cm, bevorzugt größer als 8 cm, besonders bevorzugt größer als 10 cm und besonders bevorzugt größer als 12 cm. Bevorzugt ist wenigstens eine dieser Öffnungen und sind bevorzugt mehrere dieser Öffnungen als Löcher und insbesondere als Sacklöcher ausgebildet.

Besonders bevorzugt weisen diese Öffnungen eine Tiefe (jeweils betrachtet in der Längsrichtung des Grundkörpers) auf, die geringer ist als 40 cm, bevorzugt geringer als 30 cm, besonders bevorzugt geringer als 20 cm. Diese Öffnungen können bevorzugt zum Aufnehmen von Gewindeeinsätzen ausgebildet sein.

Bei einer weiteren vorteilhaften Ausführungsform ist das Abschlusselement wenigstens teilweise aus einem Metall und/oder einem Gummi gebildet. Besonders bevorzugt kann der Stopfen einen metallartigen Grundkörper aufweisen, an dem ein Gummimaterial angeordnet ist. Insbesondere handelt es sich bei diesem Abschlusselement um einen Abschlussstopfen. Bevorzugt weist das Abschlusselement einen metallischen Kern, etwa eine metallische Platte auf, an der vollumfänglich das Hartgummimaterial angeordnet ist.

Bei einer weiteren bevorzugten Ausführungsform weist das Abschlusselement eine Kupplung auf, welche die Leitung bzw. Führung eines fließfähigen und insbesondere gasförmigen Mediums ermöglicht. Diese Kupplung kann dabei ebenfalls in die oben erwähnte Seitenwand eingearbeitet sein, genau in eine Öffnung, die in diese Seitenwand eingearbeitet ist.

Die vorliegende Erfindung ist weiterhin auf einen Sanierungspacker und insbesondere einen Sanierungspacker der oben beschriebenen Art mit einem Abschlusselement der oben beschriebenen Art gerichtet.

Die vorliegende Erfindung ist weiterhin auf ein Verfahren zum Sanieren von Elementen und insbesondere von Rohren, Schächten, Kanälen und dergleichen gerichtet. Dabei wird ein Sanierungspacker in das zu sanierende Element eingebracht und innerhalb dieses zu sanierenden Elements durch Beaufschlagung mit einem gasförmigen Medium expandiert. Erfindungsgemäß wird wenigstens zeitweise eine Flüssigkeit durch eine Öffnung transportiert, welche Öffnung sich wenigstens abschnittsweise innerhalb eines elastischen Grundkörpers des Sanierungspackers in dessen Längsrichtung erstreckt.

Weitere Vorteile und Ausführungsformen ergeben sich aus den beigefügten Zeichnungen:
Darin zeigen:
- Fig. 1: Eine Draufsicht auf eine Stirnseite eines erfindungsgemäßen Sanierungspackers;
- Fig. 2: Eine Schnittdarstellung eines erfindungsgemäßen Sanierungspackers; und
- Fig. 3: Eine Darstellung eines Abschlusselements für den in Fig. 2 gezeigten Sanierungspacker.

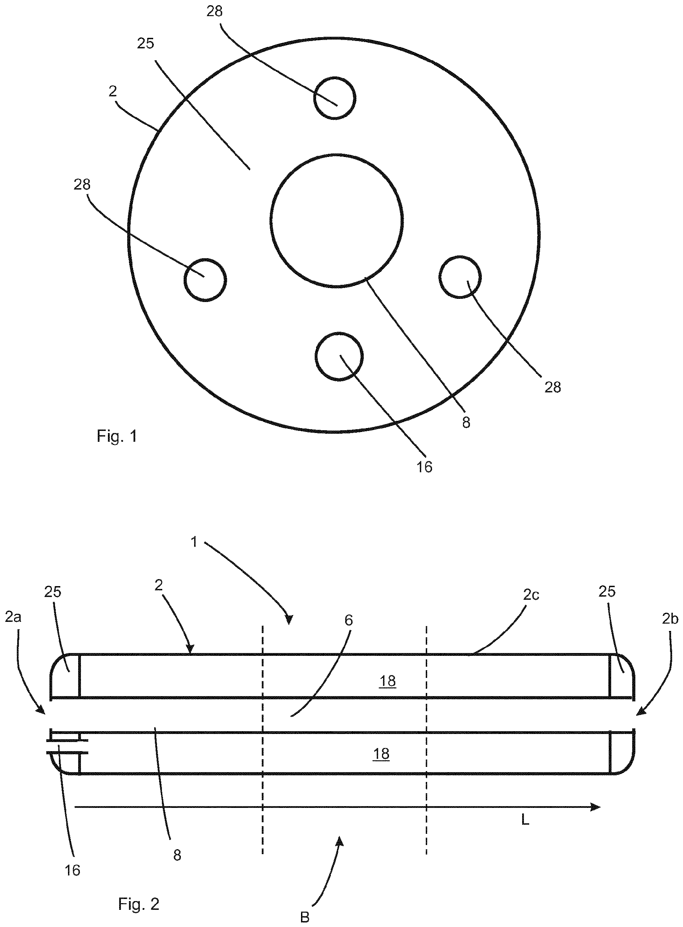

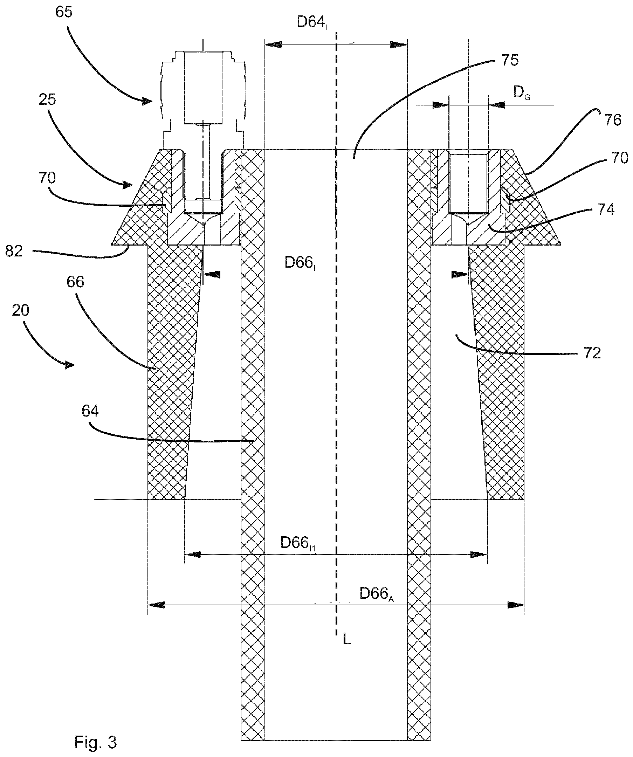

Figur 1 zeigt eine Draufsicht auf eine Stirnfläche eines erfindungsgemäßen Sanierungspackers 1. Dabei bezieht sich das Bezugszeichen 2 auf den Grundkörper und insbesondere die Umfangswandung des Grundkörpers. Bezugszeichen 8 kennzeichnet einen inneren schlauchförmigen Körper. Genauer schließt sich dieser schlauchförmige Körper an eine stirnseitig ausgebildete Öffnung an. Das Bezugszeichen 25 kennzeichnet eine Seitenwandung eines in Fig. 3 gezeigten Abschlusselements.

Die Bezugszeichen 28 kennzeichnen drei Öffnungen, die in der Seitenwandung 25, das heißt der stirnseitigen Wandung des Sanierungspackers 1 ausgebildet sind. In diesen Öffnungen 28 können, wie oben erwähnt, Werkzeuge eingeschraubt sein wie beispielsweise Haken und dergleichen, mit denen der Sanierungspacker aus einem Rohr gezogen werden kann oder auch durch ein Rohr gezogen werden kann. Genauer gesagt sind in diese Wandungen Gewindeeinsätze eingearbeitet, welche zum Einschrauben dieser Werkzeuge dienen.

Das Bezugszeichen 16 kennzeichnet eine weitere Öffnung in der Wandung 25, über welche dem Grundkörper Druckluft zu dessen Expansion zugeführt werden kann. In diese Öffnung kann eine Kupplung zum Anschließen einer Druckluftzuführung eingearbeitet sein.

Figur 2 zeigt eine Schnittdarstellung des Sanierungspackers. Auch hier ist wieder der schlauchförmige Körper 8 gezeigt, der den Hohlraum bzw. Kanal 6 ausbildet, der sich in der Längsrichtung L des Sanierungspackers von einer Stirnseite 2a zu der zweiten Stirnseite 2b erstreckt. Das Bezugszeichen 25 kennzeichnet die in Figur 1 gezeigte Stirnwandung, in der auch die einzelnen Öffnungen (nicht gezeigt) angebracht sind.

Das Bezugszeichen 18 kennzeichnet den Hohlraum, der mit der Druckluft expandierbar ist. Die beiden stirnseitigen Wandungen 25 stellen auch die mechanische Verbindung zwischen dem inneren Schlauch 8 und dem äußeren Schlauch 2 bzw. dem Grundkörper her. Bevorzugt ist der Grundkörper 2 an die stirnseitigen Flächen bzw. die Abschlusswandung 25 anvulkanisiert.

Bei der in Fig. 2 gezeigten Ausführungsform kann im Wesentlichen die gesamte Oberfläche 2c des Grundkörpers 2 an das zu sanierende Element angedrückt werden. Das Bezugszeichen B zwischen den beiden gestrichelten vertikalen Linien bezieht sich jedoch auf denjenigen Bereich, der in jedem Fall an das zu sanierende Rohr angelegt bzw. angedrückt werden kann.

Figur 3 zeigt eine Darstellung eines erfindungsgemäßen Abschlusselements 20 für einen Sanierungspacker 1. Dieses Abschlusselement, welches bevorzugt als Abschlussstopfen ausgebildet ist, dient insbesondere dazu, um den zu expandierenden Hohlraum zu begrenzen.

Dieses Abschlusselement 20 weist eine Abschlusswandung bzw. Seitenwandung 25 auf, an der ein erster Stutzen 64 angeordnet ist. Dieser Stutzen erstreckt sich in der Längsrichtung L und weist hier einen konstanten Innenquerschnitt D64_{I} sowie einen konstanten Außenquerschnitt auf. Auf diesen Stutzen wird der in Fig. 2 gezeigte schlauchförmige Körper 8 aufgeschoben bzw. aufgesteckt. Das Bezugszeichen 66 kennzeichnet einen zweiten Stutzen. Dieser zweite Stutzen weist einen hier konstanten Außendurchmesser D66_{A} und einen sich ändernden Innendurchmesser D66_{I} und D66_{I1} auf.

Auf diesen zweiten Stutzen kann der in Fig. 2 gezeigte Grundkörper 2, der ebenfalls als Schlauch ausgebildet ist aufgeschoben werden. Das Bezugszeichen 82 kennzeichnet einen Anschlag, der an der Seitenwandung 25 ausgebildet ist und an den der (nicht gezeigte) Grundkörper anstoßen kann. Das Bezugszeichen 76 kennzeichnet eine Schräge, die sich an den Anschlag anschließt. In der Folge wird der Grundkörper 2 an dem Anschlusselement 20 anvulkanisiert.

Das Bezugszeichen 72 kennzeichnet einen umlaufenden Spalt, der zwischen den beiden Stutzen 64 und 66 ausgebildet ist, und in den der schlauchförmige Körper 8 einschiebbar ist. Das Bezugszeichen 70 kennzeichnet eine Metallplatte, welche in das Hartgummimaterial des Abschlusselements 20 eingearbeitet ist. Diese Metallplatte dient auch zur Erhöhung der Stabilität sowie auch, um den Gewindeeinsätzen 74, welche in die Öffnungen der Seitenwandung 25 eingesetzt sind, einen stärkeren Halt zu geben. Das Bezugszeichen 65 kennzeichnet, eine Anschlusskupplung, welche in einen dieser Gewindeeinsätze 74 eingearbeitet ist. Das Bezugszeichen 75 kennzeichnet eine in der Seitenwandung 25 angeordnete Öffnung, welche in den Stutzen 64 mündet.

### Bezugszeichenliste

- 1: Sanierungspacker
- 2: Grundkörper bzw. äußerer Schlauch
- 2a: erste Stirnseite
- 2b: zweite Stirnseite
- 2c: Außenoberfläche des Grundkörpers
- 6: Öffnung bzw. Kanal
- 8: schlauchförmiger Körper
- 16: weitere Öffnung in der Wandung
- 18: expandierbarer Hohlraum
- 20: Abschlusselement
- 25: Abschlusswandung des Abschlusselements 20
- 28: Öffnungen in der Wandung
- 64: erster Stutzen
- 65: Kupplung
- 66: zweiter Stutzen
- 70: Metallplatte
- 72: Spalt
- 74: Gewinde
- 75: Öffnung
- 76: Schräge
- 82: Anschlag
- D64_{I}: Innendurchmesser des ersten Stutzens
- D66_{I}: erster Innendurchmesser des zweiten Stutzens
- 066_{I1}: zweiter Innendurchmesser des ersten Stutzens
- D66_{A}: Außendurchmesser des zweiten Stutzens
- D_{G}: Innendurchmesser des Gewindes
- L: Längsrichtung

## Patentansprüche

1. Sanierungspacker (1) zum wenigstens teilweisen Sanieren von Elementen und insbesondere von Rohren, mit einem elastischen Grundkörper (2), der wenigstens abschnittsweise durch die Beaufschlagung mit einem fließförmigen Medium expandierbar ist, wobei sich der elastische Grundkörper in einer vorgegebenen Längsrichtung (L) erstreckt und wobei der Grundköper (2) eine Außenoberfläche aufweist, welche sich ebenfalls in der Längsrichtung (L) erstreckt und welche vorzugsweise wenigstens in einem in dieser Längsrichtung (L) angeordneten zentralen Bereich (B) mit dem zu sanierenden Element in Kontakt bringbar ist.
**dadurch gekennzeichnet, dass**
der Sanierungspacker (1) eine Öffnung (6) aufweist, welche sich wenigstens abschnittsweise innerhalb des elastischen Grundkörpers (2) in der Längsrichtung (L) erstreckt, wobei diese Öffnung (6) eine Durchgangsöffnung (6) ist, welche sich von einer ersten Stirnseite (2a) des Grundkörpers (2) hin zu einer zweiten Stirnseite (2b) des Grundkörpers (2) erstreckt und innerhalb des Grundkörpers (2) ein schlauchförmiger Körper (8) angeordnet ist, welcher ein flexibler Körper ist und die Öffnung (6) ausbildet.

2. Sanierungspacker (1) nach Anspruch 1,
**dadurch gekennzeichnet, dass**
der Grundkörper (2) die Öffnung (6) vollständig umgibt.

3. Sanierungspacker (1) nach wenigstens einen der vorangegangenen Ansprüche,
**dadurch gekennzeichnet, dass**
der Sanierungspacker (1) einen Zuführanschluss (65) zum Zuführen eines fließfähigen Mediums an den Grundkörper (2) und/oder einen von dem Grundkörper (2) umgebenen Hohlraum (18) aufweist.

4. Sanierungspacker nach wenigstens einen der vorangegangenen Ansprüche,
**dadurch gekennzeichnet, dass**
an dem schlauchförmigen Körper (8) eine Federungseinrichtung und insbesondere eine Spiralfeder angeordnet ist.

5. Sanierungspacker (1) nach wenigstens einem der vorangegangenen Ansprüche,
**dadurch gekennzeichnet, dass**
der schlauchförmige Körper (8) ein nicht expandierbarer und/oder ein vulkanisierter Schlauch (8) ist.

6. Sanierungspacker (1) nach wenigstens einem der vorangegangenen Ansprüche,
**dadurch gekennzeichnet, dass**
der Grundkörper an wenigstens einer stirnseitigen Abschlusswandung (25) angeordnet ist, wobei in dieser Abschlusswandung (25) wenigstens eine Öffnung (28) angeordnet ist.

7. Sanierungspacker (1) nach Anspruch 1 mit einem Abschlusselement (20) mit einer Seitenwandung (25) und einem an dem dieser Seitenwandung (25) angeordneten ersten Stutzen (64) der sich in einer vorgegebenen Richtung (L) erstreckt und auf den ein schlauchförmiger Körper (8) aufschiebbar ist, und mit einem an dieser Seitenwandung angeordneten zweiten Stutzen (66), der sich ebenfalls in der vorgegebenen Richtung (L) erstreckt und der um den ersten Stutzen (64) herum angeordnet ist, wobei der zweite äußere Stutzen in seiner Erstreckungsrichtung länger als der erste Stutzen ist und die Seitenwandung (25) eine Öffnung aufweist, welche in den ersten Stutzen mündet.

8. Verfahren zum Sanieren von Elementen und insbesondere von Rohren, wobei ein Sanierungspacker (1) nach Anspruch 1 in ein zu sanierendes Element (10) eingebracht wird und innerhalb dieses zu sanierenden Elements (10) durch Beaufschlagung mit einem gasförmigen Medium expandiert wird,
**dadurch gekennzeichnet, dass**
wenigstens zeitweise eine Flüssigkeit durch eine Öffnung (6) des Sanierungspackers (1) transportiert wird, welche sich wenigstens abschnittsweise innerhalb eines elastischen Grundkörpers (2) in der Längsrichtung (L) erstreckt, wobei diese Öffnung (6) eine Durchgangsöffnung (6) ist, welche sich von einer ersten Stirnseite (2a) des Grundkörpers (2) hin zu einer zweiten Stirnseite (2b) des Grundkörpers (2) erstreckt und innerhalb des Grundkörpers (2) ein schlauchförmiger Körper (8) angeordnet ist, welcher die Öffnung (6) ausbildet.

## Claims

1. Renovation packer (1) for at least partially renovating elements and in particular pipes, having an elastic main body (2) which can be expanded at least in sections by the application of a flowing medium, wherein the elastic main body extends in a predetermined longitudinal direction (L) and wherein the main body (2) has an outer surface which also extends in the longitudinal direction (L) and which can preferably be brought into contact with the element to be renovated at least in a central region (B) arranged in this longitudinal direction (L),
**characterized in that**
the renovation packer (1) has an opening (6) which extends at least in sections within the elastic main body (2) in the longitudinal direction (L), wherein this opening (6) being a through-opening (6) which extends from a first end face (2a) of the main body (2) to a second end face (2b) of the main body (2), and a tubular body (8) which is a flexible body and forms the opening (6) is arranged within the main body (2).

2. Renovation packer (1) according to claim 1,
**characterized in that**
the main body (2) completely surrounds the opening (6).

3. Renovation packer (1) according to at least one of the preceding claims,
**characterized in that**
the renovation packer (1) has a supply connection (65) for supplying a flowable medium to the main body (2) and/or a cavity (18) surrounded by the main body (2).

4. Renovation packer according to at least one of the preceding claims,
**characterized in that**
a suspension device and in particular a coil spring is arranged on the tubular body (8).

5. Renovation packer (1) according to at least one of the preceding claims,
**characterized in that**
the tubular body (8) is a non-expandable and/or a vulcanized tube (8).

6. Renovation packer (1) according to at least one of the preceding claims,
**characterized in that**
the main body is arranged on at least one end wall (25), wherein at least one opening (28) being arranged in this end wall (25).

7. Renovation packer (1) according to claim 1, having an end element (20) with a side wall (25) and a first connecting piece (64) which is arranged on this side wall (25) and extending in a predetermined direction (L) and onto which a tubular body (8) can be pushed, and having a second connecting piece (66) which is arranged on this side wall, also extending in the predetermined direction (L) and is arranged around the first connecting piece (64), wherein the second outer connecting piece being longer in its direction of extension than the first connecting piece and the side wall (25) having an opening which opens into the first connecting piece.

8. Method for renovating elements and in particular pipes, wherein a renovation packer (1) according to claim 1 is introduced into an element (10) to be renovated and is expanded within this element (10) to be renovated by application with a gaseous medium,
**characterized in that**
at least temporarily a liquid is transported through an opening (6) of the renovation packer (1), which extends at least in sections within an elastic main body (2) in the longitudinal direction (L), wherein this opening (6) being a through-opening (6), which extends from a first end face (2a) of the main body (2) towards a second end face (2b) of the main body (2) and a tubular body (8) is arranged inside the main body (2), which tubular body forms the opening (6).

## Revendications

1. Packer de rénovation (1) destiné à rénover au moins en partie des éléments et en particulier des tuyaux, avec un corps de base élastique (2), qui peut être expansé au moins par endroits par exposition à l'action exercée par un milieu pouvant s'écouler, dans lequel le corps de base élastique s'étend dans une direction longitudinale (L) prédéfinie et dans lequel le corps de base (2) présente une surface extérieure, laquelle s'étend également dans la direction longitudinale (L) et laquelle peut être amenée en contact avec l'élément à rénover de préférence au moins dans une zone (B) centrale disposée dans ladite direction longitudinale (L),
**caractérisé en ce que**
le packer de rénovation (1) présente une ouverture (6), laquelle s'étend au moins par endroits à l'intérieur du corps de base élastique (2) dans la direction longitudinale (L), dans lequel ladite ouverture (6) est une ouverture de passage (6), laquelle s'étend depuis un premier côté frontal (2a) du corps de base (2) vers un deuxième côté frontal (2b) du corps de base (2) et un corps en forme de tuyau flexible (8), lequel est un corps flexible et réalise l'ouverture (6), est disposé à l'intérieur du corps de bas (2).

2. Packer de rénovation (1) selon la revendication 1,
**caractérisé en ce que**
le corps de base (2) entoure en totalité l'ouverture (6).

3. Packer de rénovation (1) selon au moins l'une quelconque des revendications précédentes,
**caractérisé en ce que**
le packer de rénovation (1) présente un raccord d'arrivée (65) destiné à amener un milieu pouvant s'écouler au corps de base (2) et/ou une cavité (18) entourée par le corps de base (2).

4. Packer de rénovation selon au moins l'une quelconque des revendications précédentes,
**caractérisé en ce que**
un système de suspension et en particulier un ressort hélicoïdal sont disposés sur le corps en forme de tuyau flexible (8).

5. Packer de rénovation (1) selon au moins l'une quelconque des revendications précédentes,
**caractérisé en ce que**
le corps en forme de tuyau flexible (8) est un tuyau flexible ne pouvant pas être expansé et/ou un tuyau flexible vulcanisé (8).

6. Packer de rénovation (1) selon au moins l'une quelconque des revendications précédentes,
**caractérisé en ce que**
le corps de base est disposé sur au moins une paroi de terminaison (25) côté frontal, dans lequel au moins une ouverture (28) est disposée dans ladite paroi de terminaison (25).

7. Packer de rénovation (1) selon la revendication 1 avec un élément de terminaison (20) avec une paroi latérale (25) et une première tubulure (64) disposée sur ladite paroi latérale (25), qui s'étend dans une direction prédéfinie (L) et sur laquelle un corps en forme de tuyau flexible (8) peut être enfilé, et avec une deuxième tubulure (66) disposée sur ladite paroi latérale, qui s'étend également dans la direction prédéfinie (L) et qui est disposée tout autour de la première tubulure (64), dans lequel la deuxième tubulure extérieure est plus longue dans sa direction d'extension que la première tubulure et la paroi latérale (25) présente une ouverture, laquelle débouche dans la première tubulure.

8. Procédé de rénovation d'éléments et en particulier de tuyaux, dans lequel un packer de rénovation (1) selon la revendication 1 est introduit dans un élément à rénover (10) et est expansé à l'intérieur dudit élément à rénover (10) par exposition à l'action d'un milieu gazeux,
**caractérisé en ce que**
un liquide est transporté au moins par intermittence à travers une ouverture (6) du packer de rénovation (1), laquelle s'étend au moins par endroits à l'intérieur d'un corps de base élastique (2) dans la direction longitudinale (L), dans lequel ladite ouverture (6) est une ouverture de passage (6), laquelle s'étend depuis un premier côté frontal (2a) du corps de base (2) vers un deuxième côté frontal (2b) du corps de base (2) et un corps en forme de tuyau flexible (8), lequel réalise l'ouverture (6), est disposé à l'intérieur du corps de base (2).
